Europäisches Patentamt

European Patent Office

Office européen des brevets

(19)

(11) Veröffentlichungsnummer: **0 128 241**
**B1**

(12) **EUROPÄISCHE PATENTSCHRIFT**

(45) Veröffentlichungstag der Patentschrifft:
07.02.90

(21) Anmeldenummer: 83111023.4

(22) Anmeldetag: 04.11.83

(51) Int. Cl. ⁵ : **F 16 J 15/32, F 16 J 15/34**

(54) Dichtung.

(30) Priorität: **09.06.83 DE 3320855**

(43) Veröffentlichungstag der Anmeldung:
**19.12.84 Patentblatt 84/51**

(45) Bekanntmachung des Hinweises auf die Patenterteilung:
**07.02.90 Patentblatt 90/06**

�窶 Bennante Vertragsstaaten:
**AT BE CH DE FR GB IT LI LU NL SE**

(56) Entgegenhaltungen:
**FR-E-79 114**
**GB-A-927 580**
**US-A-3 347 554**
**US-A-4 094 518**

(73) Patentinhaber: **Firma Carl Freudenberg**
**Höhnerweg 4**
**D-6940 Weinheim/Bergstrasse (DE)**

(72) Erfinder: **Hölzer, Helmut**
**Hegelstrasse 15**
**D-6940 Weinheim (DE)**

(74) Vertreter: **Weissenfeld-Richters, Helga, Dr.**
**Höhnerweg 2**
**D-6940 Weinheim/Bergstrasse (DE)**

LIBERGRAF, STOCKHOLM 1990

Beschreibung

Die Erfindung betrifft eine Dichtung, bestehend aus einem Außenring aus zähem Werkstoff, der mit wenigstens zwei ihn axial begrenzenden Dichtflächen versehen ist, aus einem Innenring aus elastischem Werkstoff, der verdrehsicher auf der Welle festgelegt ist und der sich in einem axialen Abstand radial nach außen erstreckende Flansche aufweist, die den Außenring umgreifen und die an den Dichtflächen unter einer axialen Vorspannung gleitend anliegen.

Auf eine Dichtung dieser Art nimmt die US-A-4 094 518 bezug. Außen- und Innenring sind an dem jeweils angrenzenden Maschinenteil starr festgelegt, weshalb axiale Relativverlagerungen oder Relativbewegungen der abgedichteten Welle zwangsläufig zu einer Veränderung der Anpreßkräfte zwischen den Dichtflächen und den Flanschen führen. Vorzeitiger Verschleiß und Undichtigkeiten können hiervon die Folge sein. Die präzise gegenseitige Zuordnung zwischen Außen- und Innenring macht außerdem Justierarbeiten vor Inbetriebnahme erforderlich, die unter wirtschaftlichen Gesichtspunkten häufig nicht vertretbar sind.

Aus der GB-A-927 580 ist eine ähnlich aufgebaute Dichtung bekannt, bei der der Außenring mit zwei in radialer Richtung nach innen vorspringenden Flanschen versehen ist, welche die einander geneigt gegenüberliegenden Dichtflächen des in radialer Richtung nach außen vorspringenden Innenringes beiderseits umgreifen und gleitend mit einer elastischen Vorspannung berühren. Im Hinblick auf die Erzielung eines befriedigenden Abdichtungsergebnisses muß die Vorspannung erheblich sein. Sie hat nicht nur eine starke Hemmung der Relativbeweglichkeit des Außenringes in bezug auf den Innenring zur Folge sondern darüberhinaus einen erheblichen Verschleiß vor allem im Bereich der aus elastomerem Werkstoff bestehenden Flansche. Die Gebrauchsdauer einer solchen Dichtung ist wenig befriedigend.

Eine weitere Dichtung dieser Art ist aus der FR-E-79 114 bekannt. Die relativbeweglichen Teile sind dabei einander in einer axialen Richtung zugeordnet, wodurch die aus gummielastischem Material bestehenden Dichtlippen des einen Teils das andere im Bereich von radial nach außen- bzw. nach innen weisenden Dichtflächen berühren. Die bei drehender Welle in den Dichtlippen wirksamen Fliehkräfte bedingen eine Veränderung der Anpressung der Dichtlippen an die zugehörigen Dichtflächen. Das mit dieser Dichtung erzielbare Abdichtungsergebnis ist dementsprechend wenig befriedigend. Da das Innenteil der Dichtung auf der Welle in axiales Richtung festliegt, ist es weiterhin davon abhängig, daß die einander berührenden Teile in axiales Richtung einander in spezifischer Weise zugeordnet sind.

Der Erfindung liegt die Aufgabe zugrunde, eine Dichtung der eingangs genannten Art derart weiterzuentwickeln, daß unter Vermeidung von aufwendigen Justierarbeiten vor oder nach der Inbetriebnahme ein geringer Verschleiß und ein gutes Abdichtungsergebnis über eine verbesserte Zeitspanne auch dann gewährleistet sind, wenn mit betriebsbedingten, axialen und/oder Winkelverlagerungen des abzudichtenden Maschinenteiles gerechnet werden muß.

Diese Aufgabe wird erfindungsgemäß bei einem Radialwellendichtring der eingangs genannten Art mit den kennzeichnenden Merkmalen des Patentanspruchs 1 gelöst. Auf vorteilhafte Ausgestaltungen nehmen die Unteransprüche Bezug.

Der Innenring der vorgeschlagenen Ausführung ist durch die ihm eigene Elastizität verdrehsicher und flüssigkeitsdicht auf der abgedichteten Welle festgelegt. Er folgt deren Drehbewegung, und die hierdurch verursachten Fliehkräfte begünstigen die erzielte Abdichtungswirkung. Die flächig an den Dichtflächen des Außenringes anliegenden Flansche berühren diese gleitend mit geringer Vorspannung, weshalb nennenswerte Reibungskräfte für eine Relativbewegung nicht zu überwinden sind. Der Verschleiß im Bereich der dynamischen Abdichtungszone ist dementsprechend außerordentlich gering, und es wird, verglichen mit Dichtungen der eingangs genannten Art, eine wesentlich verminderte Bremswirkung auf die sich drehende Welle ausgeübt. Das sich durch die identische Ausbildung der beiden Flansche zwischen diesen unter Betriebsbedingungen einstellende Vakuum begünstigt außerdem ein selbsttätiges Nachstellen der Flansche und damit einen Ausgleich des Verschleißvolumens.

Der Außenring weist ein nach innen verjüngtes Profil auf mit stirnseitigen Begrenzungsflächen, die einen Flankenwinkel von 20 bis 120 Grad, vorzugsweise einen solchen von 60 bis 90 Grad zwischen sich einschließen. Die zugeordneten Flansche des Innenringes liegen gleitend an den Begrenzungsflächen an und schließen vor dem Einfügen des Außenringes einen Winkel von 0 bis 30 Grad zwischen sich ein, mit der Maßgabe, daß der Winkel kleiner ist als der Flankenwinkel der Dichtflächen. Eine geringe Anpreßkraft zwischen den Flanschen und den Dichtflächen des Außenringes ist dadurch stets vorhanden. Nur hierauf kommt es im Rahmen der vorliegenden Erfindung an. Es ist somit nicht notwendig, den angestrebten Abdichtungseffekt durch eine zu hohem Verschleiß führende, starke gegenseitige Verpressung der aufeinander gleitenden Flächen zu erkaufen, wie beispielsweise bei üblichen Lippendichtungen gebräuchlich. Der Innenring der vorgeschlagenen Ausführung kann dadurch auch aus relativ weichen, flexiblen Elastomerwerkstoffen hergestellt werden. Für die Ausbildung der Flansche genügt eine relativ geringe Wandstärke. Sekundäre Andrückelemente werden im allgemeinen nicht benötigt. Bei der vorgeschlagenen Ausführung unterliegt weder der Außen- noch der Innenring besonderen Belastungen. Die beiderseits verwendeten Werkstoffe können dadurch aus einer besonders großen Palette ausgewählt werden.

Neben metallischen, organischen und anorganischen Werkstoffen für die Herstellung des Außenringes können für den Innenring neben den gebräuchlichen gummielastischen Werkstoffen auch Polytetrafluoräthylen und Polypropylen verwendet werden. Es versteht sich von selbst, daß im einzelnen eine Detailprüfung unerläßlich ist.

Dichtflächen und Flansche sind regelmäßig spiegelbildlich ausgebildet und der Rotationsachse unter gleichen Winkeln zugeordnet. Eine Pumpwirkung im Bereich der Dichtflächen wird dadurch vermieden, was sich vorteilhaft auswirkt in bezug auf die Vermeidung der Einlagerung von Verschmutzungen in die enthaltenen Freiräume. Eine gute Relativbeweglichkeit ist dadurch jederzeit gewährleistet.

Zwischen dem Nutgrund des Innenringes und dem Außenring ist ein radialer Abstand vorhanden. Der Innenring weist dadurch eine gute Relativbeweglichkeit auf, bezogen auf den Außenring, was von Bedeutung ist in bezug auf den Ausgleich der Bewegungen einer in radialer Richtung schwingenden Welle. Zusätzlich erfährt der Dichtspalt zwischen den Dichtflächen und den beiderseits zugeordneten Flanschen eine erhebliche Querschnittserweiterung, die eine Unterbrechung der wirksamen Kapillarkräfte bedingt. Auch bei Wellenstillstand kann eine Überflutung der Dichtung nicht mehr zu Undichtigkeiten führen.

Der Außenring kann mehrere Paare Dichtflächen aufweisen, die in radialer Richtung aufeinanderfolgen, wenn der Flankenwinkel des inneren Dichtflächenpaares kleiner ist als der Flankenwinkel des außerhalb folgenden Paares. Die Dichtflächen können außenseitig in eine axial vorspringende Zylinderfläche übergehen, an der der jeweils zugeordnete Flansch des Innenringes mit einer weiteren Berührungsfläche anliegt. Diese kann der eigentlichen Dichtungsfläche in Wirkungsrichtung vor- bzw. nachgeschaltet sein, was zu einer deutlichen Verbesserung des erzielten Abdichtungsergebnisses führt. Zwischen den aufeinanderfolgenden Dichtflächen und/oder wenigstens einer Dichtfläche und der daran anschließenden Zylinderfläche kann eine umlaufende Eintiefung des Außeninges vorgesehen sein, die die gegenseitige Abgrenzung der Wirkungen aufeinanderfolgender Dichtflächen begünstigt. Entsprechende Ausführungen sind daher besonders gut für die Abdichtung höherer Drücke geeignet.

Die dynamische Dichtungszone der vorgeschlagenen Dichtung ist bei der Abdichtung von Flüssigkeiten infolge der hier wirksamen Kapillarkräfte ständig benetzt. Die Dichtung weist dadurch ausgezeichnete Notlaufeigenschaften auf.

In Anwendungsfällen, in denen das abgedichtete Medium nicht für den Aufbau eines schmierend wirksamen Filmes geeignet ist, können gute Abdichtungsergebnisse erzielt werden, wenn der Außenring wenigstens einen schmierstoffgefüllten Hohlraum enthält, der allseitig geschlossen ist und der in dem dem Nutgrund des Innenringes gegenüberliegenden Bereich wenigstens eine Öffnung aufweist. Diese soll mittig zwischen den beiden ein Paar bildenden Dichtflächen angeordnet sein, um zu erreichen, daß der Schmierstoff parallel zu dem sich mit beginnender Umdrehung der Welle aufbauenden Vakuum nach seinem Austreten aus den Öffnungen gleichmäßig auf alle vorhandenen Dichtungszonen verteilt wird.

Der in dem Außenring enthaltende Hohlraum kann die abgedichtete Welle in ihrer Gesamtheit umschließen. Das enthaltene Volumen an Schmierstoff, es handelt sich zumeist um ein Fett, ist in diesem Falle besonders groß. Es bietet sich zugleich an, die Öffnung durch einen in radialer Richtung nach innen geöffneten Schlitz zu bilden, der die Welle auf ihrem gesamten Umfang umschließt, und durch den das Fett auf dem gesamten Umfang gleichmäßig austreten und an die Dichtflächen gelangen kann.

Die vorgeschlagene Dichtung zeichnet sich durch eine besondere Robustheit gegenüber mechanischen Belastungen aus. Sie wird als geschlossene Baueinheit geliefert, läßt sich besonders einfach montieren und bedarf zur Herstellung einer guten Funktionssicherheit keinerlei nachträglichen Justierung. Radial-, Axial- und Winkelverlagerungen der abgedichteten Welle sind ohne wesentlichen Einfluß auf das erzielte Abdichtungsergebnis. Eine Anpassung der äußeren Abmessungen an diejenigen der bekannten Radialwellendichtringe ist möglich, die Herstellung billig und eine besondere Oberflächenbearbeitung der abgedichteten Welle nicht mehr erforderlich.

Die in der Anlage beigefügten Zeichnungen zeigen zwei beispielhafte Ausführungen der vorgeschlagenen Dichtung in halbgeschnittener Darstellung. Es zeigen:

Figur 1 eine Ausführung, bei der der Außenring aus Stahlblech besteht und einen schmierstoffgefüllten Hohlraum umschließt.

Figur 2 eine Ausführung, bei der der Außenring zwei Paare radial ineinanderliegende Begrenzungsflächen aufweist.

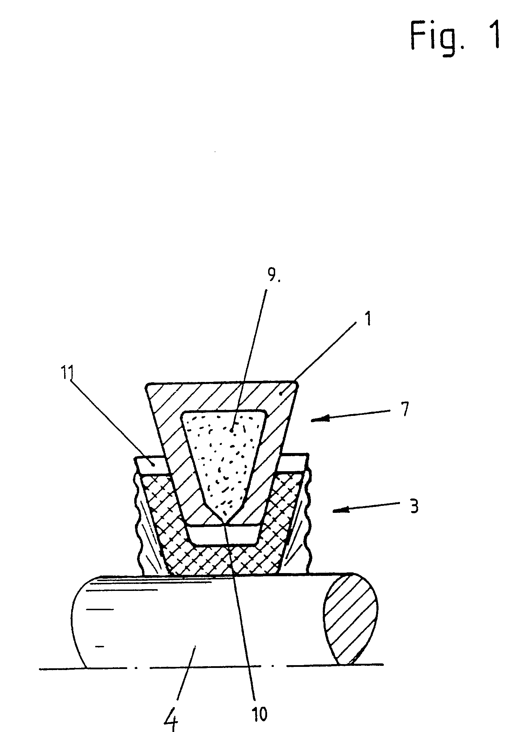

Die Ausführung nach Figur 1 besteht aus dem Außenring 7 und dem Innenring 3.

Der Außenring 7 besteht aus Stahlblech und umschließt in seiner Gesamtheit einen umlaufenden Hohlraum 9, der mit einem Schmiermittel gefüllt ist. Der Hohlraum 9 weist nur eine einzige Öffnung auf. Diese besteht aus einem umlaufenden Schlitz 10, der der Symmetrieachse des Radialwellendichtringes mittig zugeordnet ist.

Der zugehörige Innenring 3 ist spiegelbildlich ausgebildet. Seine Flansche liegen beiderseits an den stirnseitigen Begrenzungsflächen des Außenringes an. Sie sind im Bereich des Außendurchmessers mit einer Wellung 11 versehen, die in der Vorderansicht sternförmig ausgebildet ist. Der Verbindüngssteg zwischen den Flanschen hat ereichelastische Eigenscheften, die sowohl eine güte axiale Verschiebbarkeit auf der Welle gesvährleisten als auch in bezug auf die Welle eine aus reichande statische Abdichtung und Festbegung gegen Verdschung.

Bei drehender Welle baut sich bei der Ausführung nach Figur 1 im Zwischenraum zwischen dem Nutgrund des Innenringes und dem Außenring ein Vakuum auf. Das in dem Hohlraum 9 enthaltene Schmiermittel erfährt hierdurch eine Druckentlastung, wodurch eine gewisse Menge durch den Spalt 10 austritt und durch den sich drehenden Innenring in Richtung der beiderseits zugeordneten Dichtungsflächen gefördert wird. Die in diesem Bereich auftretende Reibung und damit der Verschleiß erfahren eine Verminderung.

Der Hohlraum 9 kann in einer nicht dargestellten Ausführungsform durch eine Drosselöffnung mit der Atmosphäre verbunden sein. In diesem Falle resultiert ein kontinuierliche Zuführung von Schmiermittel zu den Dichtungsflächen, was die vorgeschlagene Dichtung besonders geeignet macht für die Abdichtung bisher schwierig abzudichtender Substanzen. Um dabei Engpässe hinsichtlich des in der neuen Dichtung vorhandenen Schmiermittelvolumens zu vermeiden, kann die Drosselöffnung zugleich mit einer Nachfüllmöglichkeit für Schmierstoff verbunden sein, beispielsweise mit einem Schmiernippel.

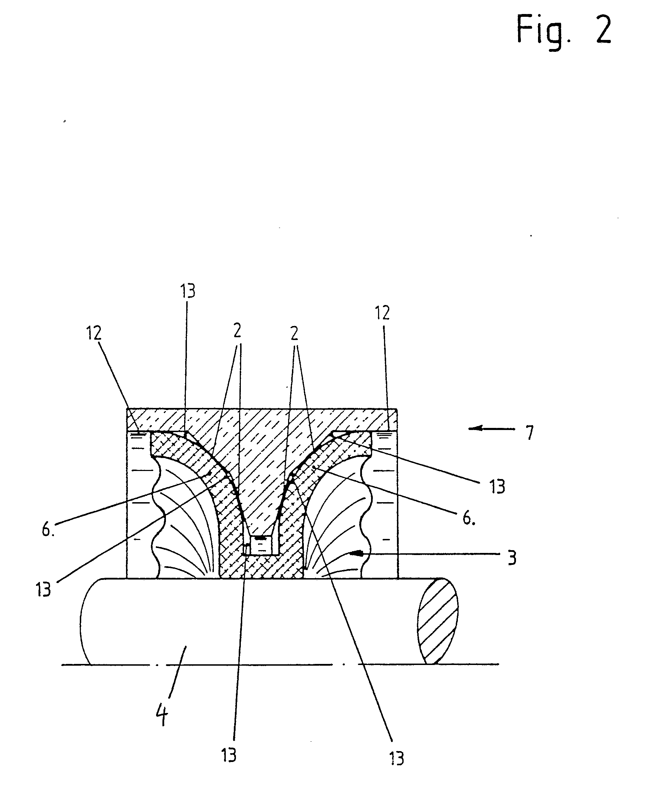

Bei der in Figur 2 gezeigten Ausführung ist das Profil des Außenringes 7 und des Innenringes 3 spiegelbildlich ausgebildet, wobei die stirnseitigen Begrenzungsflächen 2 des Außenringes in sich gebrochen sind. Die radial innenliegenden Begrenzungsflächen schließen miteinander einen Winkel von 35 Grad ein, die radial außenliegenden Begrenzungsflächen einen Winkel von 90 Grad. Sie stoßen stumpfwinklig aufeinander und auf die Zylinderflächen 12, wodurch eine gleichmäßige seitliche Abbiegung der Flanschen 6 des Innenringes 3 bedingt ist. Diese berühren jede der genannten Flächen in eng begrenzten Bereichen. Die einzelnen Bereiche sind durch insgesamt fünf Freiräume 13 räumlich voneinander getrennt. Die Anzahl kann gegebenenfalls vergrößert werden und ermöglicht eine funktionelle Hintereinanderschaltung von beliebig vielen, unabhängig wirksamen Dichtflächen mit einfachsten Mitteln. Entsprechende Ausführungen sind insbesondere für die Abdichtung hoher Drücke geeignet. Die Freiräume 13 können durch Ausnehmungen des Wulstes zwischen jeweils zwei aufeinanderfolgenden Begrenzungsflächen 2 und/oder eine Begrenzungsfläche 2 und der anschließenden Zylinderfläche 12 gebildet sein. Die Freiräume werden wegen der identischen Ausbildung der Flansche unter Betriebsbedingungen nicht durchströmt. Eine die Funktion gefährdende Einlagerung von Feststoffen aus dem abgedichteten Medium oder der Umgebung ist nicht möglich. Innening und Außenring werden gemeinsam montiert, wobei eine verbleibende Relativverlagerung spätestens bei Einleitung von Schwingungen selbsttätig ausgeglichen wird. Es erübrigt sich daher jede Justierung.

## Patentansprüche

1. Dichtung, bestehend aus einem Außenring(7) aus zähem Werkstoff, der mit wenigstens zwei ihn axial begrenzenden Dichtflächen (2) versehen ist, aus einem Innenring (3) aus elastischem Werkstoff, der verdrehsicher auf der Welle (4) festgelegt ist und der sich in einem axialen Abstand radial nach außen erstreckende Flansche (6) aufweist, die den Außenring (7) umgreifen und die an den Dichtflächen (2) unter einer axialen Vorspannung gleitend anliegen, dadurch gekennzeichnet, daß die Flansche (6) identisch ausgebildet sind, daß die einander gegenüberliegenden Dichtflächen (2) einen Flankenwinkel von 20 bis 120 Grad einschließen und die Flansche (6) einen Winkel von 0 bis 30 Grad, mit der Maßgabe, daß der Winkel zwischen den Flanschen (6) des Innenrings (3) kleiner ist als der Flankenwinkel zwischen den Dichtflächen (2) des Außenrings (7), so daß der Innenring (3) selbstzentrierend am Außenring (7) anliegt.

2. Dichtung nach Anspruch 1, dadurch gekennzeichnet, daß der Flankenwinkel 60 bis 90 Grad beträgt.

3. Dichtung nach Anspruch 1 bis 2, dadurch gekennzeichnet, daß die Dichtflächen (2) außenseitig jeweils von einer axial vorspringenden Zylinderfläche (12) begrenzt sind.

4. Dichtung nach Anspruch 1 bis 3, dadurch gekennzeichnet, daß in radialer Richtung wenigstens zwei Paar Dichtflächen (2) aufeinanderfolgen und daß der Flankenwinkel des inneren Dichtflächenpaares kleiner ist als der Flankenwinkel des außerhalb folgenden Paares.

5. Dichtung nach Anspruch 3 bis 4, dadurch gekennzeichnet, daß die Flansche (6) zusätzlich die Zylinderfläche (12) berühren.

6. Dichtung nach Anspruch 3 bis 5, dadurch gekennzeichnet, daß zwischen den aufeinanderfolgenden Dichtflächen (2) und/oder wenigstens einer Dichtfläche und der Zylinderfläche (12) eine umlaufende Eintiefung (13) vorgesehen ist.

7. Dichtung nach Anspruch 1 bis 6, dadurch gekennzeichnet, daß die Dichtflächen (2), die Zylinderfläche (12) und/oder die diesen zugeordneten Flächen der Flansche (6) mit hydrodynamisch wirkenden Rückförderelementen versehen sind.

8. Dichtung nach Anspruch 1 bis 7, dadurch gekennzeichnet, daß die Flansche (6) auf dem Außenumfang verteilte, radiale Vorsprünge haben.

9. Dichtung nach Anspruch 1 bis 8, dadurch gekennzeichnet, daß die Dichtflächen (2) auf einem Wulst (1) angeordnet sind, der wenigstens einen schmierstoffgefüllten Hohlraum (9) enthält und daß der Hohlraum (9) mit wenigstens einer dem

# EP 0 128 241 B1

Nutgrund (8) des Innenringes (3) gegenüberliegenden Öffnung (10) versehen ist.

## Claims

1. A seal composed of an outer ring (7) of tough material, which is provided with at least two sealing faces (2) bounding it axially, of an inner ring (3) of resilient material, which is fixed secure against rotation on the shaft (4) and which has flanges (6) which extend radially outwards at an axial spacing, engage round the outer ring (7) and rest slidingly against the sealing faces (2) with an axial prestress, characterized in that the flanges (6) are of identical design, in that the mutually opposite sealing faces (2) enclose a flank angle of 20 to 120 degrees and the flanges (6) enclose an angle of 0 to 30 degrees, with the proviso that the angle between the flanges (6) of the inner ring (3) is smaller than the flank angle between the sealing faces (2) of the outer ring (7), so that the inner ring (3) rests selfcenteringly against the outer ring (7).

2. A seal according to Claim 1, characterized in that the flank angle is 60 to 90 degrees.

3. A seal according to any of Claims 1 to 2, characterized in that the sealing faces (2) are bounded on the outside by in each case one axially projecting cylindrical face (12).

4. A seal according to any of Claims 1 to 3, characterized in that at least two pairs of sealing faces (2) succeed one another in the radial direction and that the flank angle of the inner sealing face pair is smaller than the flank angle of the succeeding pair towards the outside.

5. A seal according to any of Claims 3 to 4, characterized in that the flanges (6) additionally touch the cylindrical face (12).

6. A seal according to any of Claims 3 to 5, characterized in that a circumferential recess (13) is provided between the successive sealing faces (2) and/or between at least one sealing face and the cylindrical face (12).

7. A seal according to any of Claims 1 to 6, characterized in that the sealing faces (2), the cylindrical face (12) and/or those faces of the flanges (6) which are associated with these faces are provided with hydrodynamically acting return elements.

8. A seal according to any of Claims 1 to 7, characterized in that the flanges (6) have radial projections distributed on the outer periphery.

9. A seal according to any of Claims 1 to 8, characterized in that the sealing faces (2) are arranged on a bead (1) which contains at least one lubricant-filled cavity (9) and in that the cavity (9) is provided with at least one opening (10) situated opposite the groove base (8) of the inner ring (3).

## Revendications

1. Joint constitué d'une bague extérieure (7) en matériau tenace, qui est pourvue d'au moins deux surfaces d'étanchéité (2) qui la délimitent dans le sens axial, d'une bague intérieure (3) en matériau élastique qui est fixée sur l'arbre (4) de manière à empêcher sa rotation et qui présente, à une certaine distance axiale, des brides (6) s'étendant radialement vers l'extérieur qui entourent la bague extérieure (7) et qui appuient à frottement contre les surfaces d'étanchéité (2) sous une précontrainte axiale, caractérisé en ce que les brides (6) présentent une disposition identique, que les surfaces d'étanchéité (2) opposées l'une à l'autre forment entre elles un angle de flanc de 20 à 120° et que les brides (6) forment un angle de 0 à 30° avec, comme condition, que l'angle entre les brides (6) de la bague intérieure (3) soit plus petit que l'angle des flancs entre les surfaces d'étanchéité (2) de la bague extérieure (7), si bien que la bague intérieure (3) prend appui sur la bague extérieure (7) avec centrage automatique.

2. Joint selon la revendication 1, caractérisé en ce que l'angle des flancs est compris entre 60 et 90°.

3. Joint selon les revendications 1 et 2, caractérisé en ce que les surfaces d'étanchéité (2) sont délimitées chacune extérieurement par une surface cylindrique (12) faisant saillie dans le sens axial.

4. Joint selon les revendications 1 à 3, caractérisé en ce que deux paires au moins de surfaces d'étanchéité sont disposées l'une derrière l'autre en direction radiale et que l'angle de flanc de la paire de surfaces d'étanchéité intérieure est plus petit que l'angle de flanc de la paire qui la suit vers l'extérieur.

5. Joint selon les revendications 3 et 4, caractérisé en ce que les brides (6) viennent également au contact de la surface cylindrique (12).

6. Joint selon les revendications 3 à 5, caractérisé en ce qu'il existe entre les surfaces d'étanchéité successives (2) et/ou au moins une surface d'étanchéité de la surface cylindrique (12) un renfoncement périphérique (13).

7. Joint selon les revendications 1 à 6, caractérisé en ce que les surfaces d'étanchéité (2), la surface cylindrique (12) et/ou les surfaces des brides (6) correspondant à celles-ci sont pourvues d'éléments de renvoi à action hydrodynamique.

8. Joint selon les revendications 1 à 7, carac-

5

térisé en ce que les brides (6) présentent des saillies radiales réparties sur leur périphérie extérieure.

9. Joint selon les revendications 1 à 8, caractérisé en ce que les surfaces d'étanchéité (2) sont disposées sur un bourrelet (1) qui contient au moins une cavité (9) remplie de lubrifiant et que la cavité (9) est pourvue d'au moins un orifice (10) tourné vers le fond de la rainure (8) de la bague intérieure (3).

Fig. 1

Fig. 2